# EUROPEAN PATENT APPLICATION

(11) **EP 2 668 974 A2**
(43) Date of publication of application: **04.12.2013**
(21) Application number: 13168910.1
(22) Date of filing: 23.05.2013
(51) Int. Cl.: A62B 35/00

(54) **Mobile safety anchoring device**

(30) Priority: 29.05.2012 TW 101119139
(71) Applicant: Ming Ren Hang Co. Ltd., 802 Kaohsiung City (TW)
(72) Inventor: Lee, Kuo-Su, 802 Kaohsiung City (TW)
(74) Representative: Fleuchaus, Michael A.

(57) **Abstract**

A mobile safety anchoring device (3) is adapted to be slidably sleeved around a vertical extension member (91)and includes an outer ring member (4) whose inner surface has a converging portion (413), an inner ring member (5) slidably received in the outer ring member (4) and having multiple positioning holes (513), multiple positioning members (6) respectively disposed in the positioning holes (513) and between the converging portion (413) and the vertical extension member (91), a resilient component (52) for biasing the positioning members (6) toward the converging portion (413) to abut against the vertical extension member (91), and a limiting member (7) connected to the protruding portion (512) and operable to move relative to the inner ring member (5) between locked and unlocked positions.

## Description

The invention relates to an anchoring device, more particularly to a mobile safety anchoring device adapted for securing a vertically extending member such as a lifeline.

Shown in Fig. 1 is a conventional mobile safety anchoring device 1 disclosed in US Patent No. 3335469 and including a housing 11, a cone-shaped member 12 that is disposed in an end of the housing 11, a slider 13 that extends through the cone-shaped member 12, and a plurality of steel balls 14 that are received in the slider 13 and disposed adjacent to the cone-shaped member 12. When the housing 11 is downwardly pulled in relation to the slider 13, the steel balls 14 will be pressured by the cone-shaped member 12 to move inwardly to press against and secure a rope 15 that extends through the slider 13, such that the conventional mobile safety anchoring device 1 can no longer move in relation to the cord 15. To release the conventional mobile safety anchoring device 1 from this securing state, the slider 13 is downwardly pushed in relation to the main body 11, simultaneously moving the steel balls 14 downward until the cord 15 is released from being pressed against by the steel balls 14. At this time, the conventional mobile safety anchoring device 1 can slide along the cord 15 for position adjustment.

Shown in Fig. 2 is another conventional mobile safety anchoring device 2 disclosed in Japanese Patent Application Publication No. H10-184814 and including a housing 21 that has an inner coned surface 211, an inner sleeve member 22 disposed in the housing 21, a cover body 23 threadedly engaged to the inner sleeve member 22, and a plurality of spheres 24 received in the inner sleeve member 22. The conventional mobile safety anchoring device 2 functions similarly to the conventional mobile safety anchoring device 1, where the inner coned surface 211 is used to push the spheres 24 to press against a cord 25 that passes through the inner sleeve member 22, and where when the cover body 23 is pressed to move the inner sleeve member 22downwardly relative to the housing 21, the spheres 24 will be released from being pushed by the inner coned surface 211 and allow positioning adjustments of the conventional mobile safety anchoring device 2 along the cord 25.

For both of the aforementioned cases, neither the slider 13 nor the inner sleeve member 22 may be secured so that the steel balls 14 and the spheres 24 may be released from clamping the rope 15 and the cord 25, leading to safety concerns. In addition, taking the conventional mobile safety anchoring device 2 for illustration, when the same is subjected to an oblique force, the spheres 24 will be at asymmetric positions relative to the inner coned surface 211, forming gaps therebetween, and making the clamping of the conventional mobile safety anchoring device 2 on the cord 25 unstable.

Therefore, the object of the present invention is to provide a mobile safety anchoring device that can eliminate the aforesaid drawbacks of the prior art.

According to the present invention, there is provided a mobile safety anchoring device adapted to be slidably sleeved around a vertical extension member. The mobile safety anchoring device includes an outer ring member, an inner ringmember, a plurality of positioning members, a resilient component and a limiting member.

The outer ring member is adapted for surrounding the vertical extension member and includes an outer surrounding wall that defines an accommodating space. The outer surrounding wall has a top end and a bottom end that is opposite to the top end. An inner surface of the outer surrounding wall has a first converging portion that converges from the bottom end toward the top end.

The inner ring member is adapted for surrounding the vertical extension member and is slidably and partially received in the accommodating space of the outer ring member. The inner ring member includes an inner surrounding wall that defines a passage for extension of the vertical extension member therethrough. The inner surrounding wall has a protruding portion that protrudes outwardly of the accommodating space, and a plurality of positioning holes that are disposed within the accommodating space.

The positioning members are respectively disposed in the positioning holes in the inner ring member and between the first converging portion of the inner surface of the outer ring member and the vertical extension member.

The resilient component abuts against the inner surrounding wall of the inner ring member for generating a biasing force that moves the inner ring member in relation to the outer ring member in a way that the positioning members are moved toward the first converging portion and forced by the first converging portion to abut against the vertical extension member, thereby positioning the mobile safety anchoring device on the vertical extension member.

The limiting member is connected to the protruding portion of the inner ring member, and is operable to move relative to the inner ring member between a locked position and an unlocked position. When in the locked position, the limiting member abuts against the outer ring member and prevents movement of the inner ring member relative to the outer ring member against the biasing force generated by the resilient component. When in the unlocked position, the limiting member forms a gap with the outer ring member and is operable to bring the inner ring member to move relative to the outer ring member to overcome the biasing force of the resilient component such that the positioning members are no longer forced by the first converging portion of the outer ring member to abut against the vertical extension member to permit the mobile safety anchoring device to slide along the vertical extension member.

Other features and advantages of the present invention will become apparent in the following detailed description of the preferred embodiment with reference to the accompanying drawings, of which:

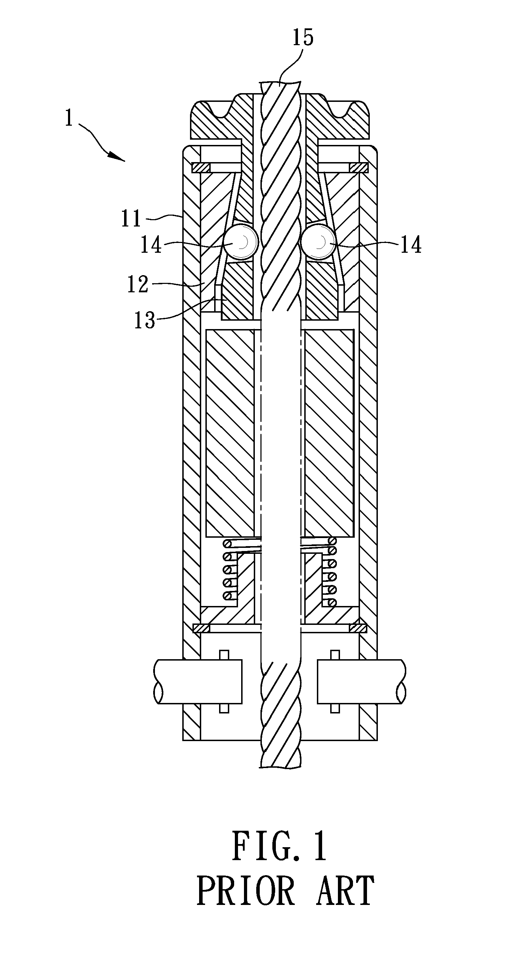

Fig. 1 is a sectional view of a conventional mobile safety anchoring device;

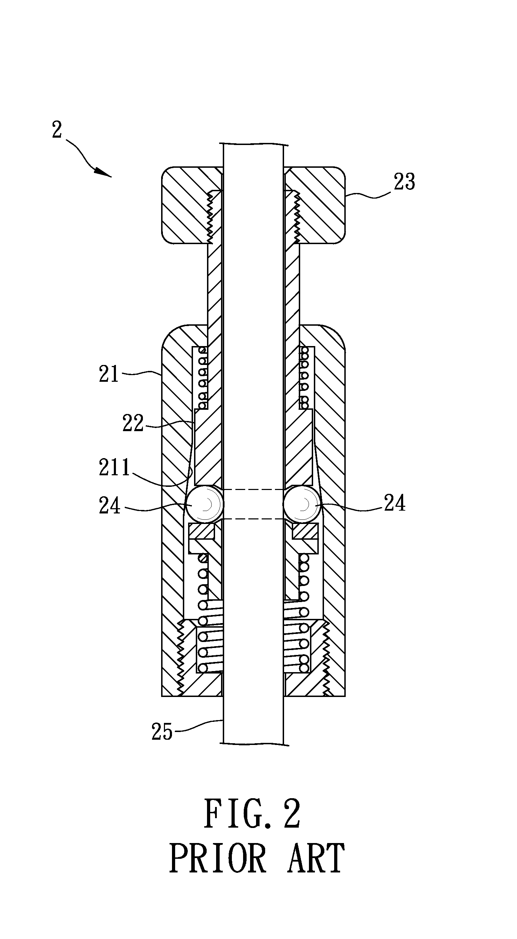

Fig. 2 is a sectional view of another conventional mobile safety anchoring device;
Fig. 3 is an exploded sectional view of the preferred embodiment of the mobile safety anchoring device according to the present invention;
Fig. 4 is an assembled sectional view of the preferred embodiment for illustrating a limiting member in an unlocked position and an inner ring member biased by a plurality of resilient members to move upward;
Fig. 5 is an assembled sectional view of the preferred embodiment for illustrating the limiting member in the unlocked position and the limiting member being pressed by a user to bring the inner ring member to overcome a biasing force generated by the resilient members;
Fig. 6 is an assembled sectional view of the preferred embodiment for illustrating the limiting member in a locked position; and
Fig. 7 is a partly sectional schematic view of an assembly of a plurality of the preferred embodiments interconnected by a plate.

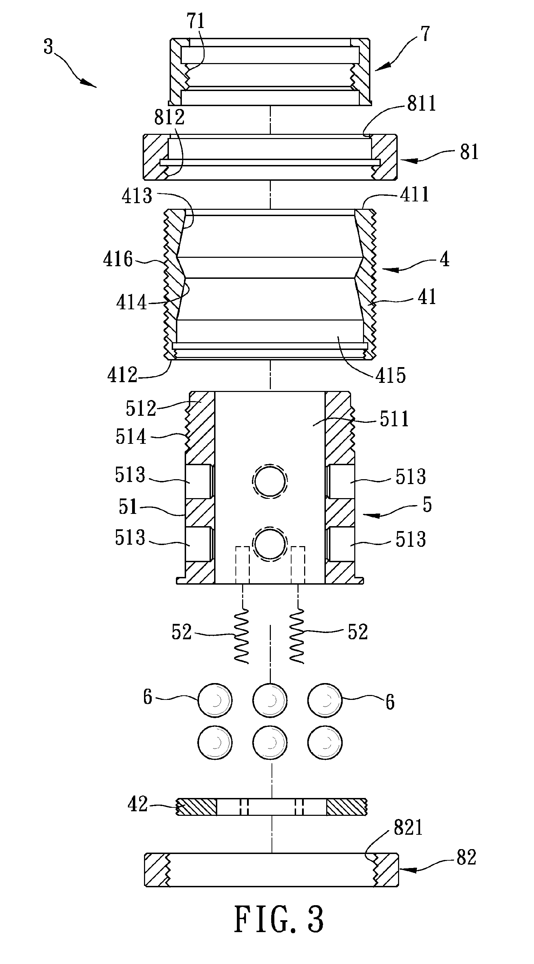

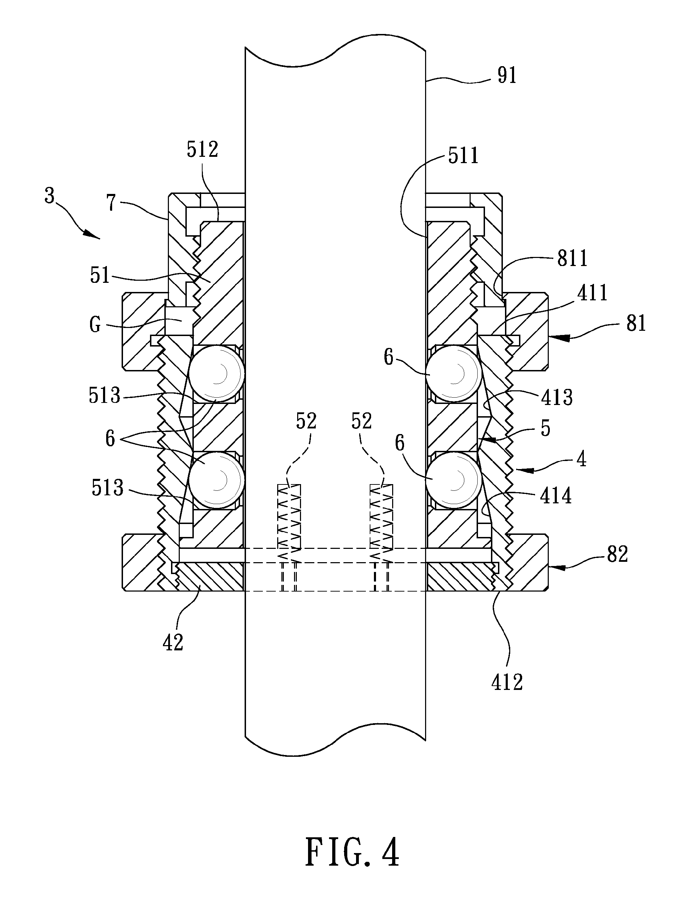

Referring to Fig. 3 and 4, the preferred embodiment of a mobile safety anchoring device 3 according to the present invention is adapted to be slidably sleeved on a vertical extension member 91. The vertical extension member 91 may be a rod or a rope such as a lifeline and is not limited thereto.

The mobile safety anchoring device 3 includes an outer ring member 4, an inner ring member 5, a plurality of positioning members 6, a plurality of resilient components 52 and a limiting member 7.

The outer ring member 4 is adapted for surrounding the vertical extension member 91 and includes an outer surrounding wall 41 and a blocking wall 42. The outer surrounding wall 41 defines an accommodating space 415 and has a top end 411 and a bottom end 412 that is opposite to the top end 411. An inner surface of the outer surrounding wall 41 has spaced-apart first and second converging portions 413, 414 each converging from the bottom end 412 toward the top end 411. The blocking wall 42 is secured to the bottom end 412 of the outer surrounding wall 41.

The inner ring member 5 is adapted for surrounding the vertical extension member 91 and is slidably and partially received in the accommodating space 415 of the outer ring member 4. The inner ring member 5 includes an inner surrounding wall 51 that defines a passage 511 for extension of the vertical extension member 91 therethrough. The inner surrounding wall 51 has a protruding portion 512 that protrudes outwardly of the accommodating space 415, and a plurality of positioning holes 513 that are disposed within the accommodating space 415.

The positioning members 6 are each disposed in a respective one of the positioning holes 513 in the inner ring member 5 and between the vertical extension member 91 and a corresponding one of the first and second converging portions 413, 414 of the inner surface of the outer ring member 4. In this embodiment, each of the positioning members 6 is a sphere.

The resilient components 52 abut against and between the inner surrounding wall 51 of the inner ring member 5 and the blocking wall 42 of the outer ring member 4 for generating a biasing force that moves the inner ring member 5 in relation to the outer ring member 4, such that the positioning members 6 are moved respectively toward the first and second converging portions 413, 414 and are forced by the first and second converging portions 413, 414 to abut against the vertical extension member 91, thereby positioning the mobile safety anchoring device 3 on the vertical extension member 91. The positioning holes 513 in the inner ring member 5 are respectively aligned with the first and second converging portions 413, 414 when the biasing force generated by the resilient components 52 is not overcome. In this embodiment, each of the resilient components 52 is a compression spring. It should be noted herein that this invention is not to be limited to the number of the resilient components 52.

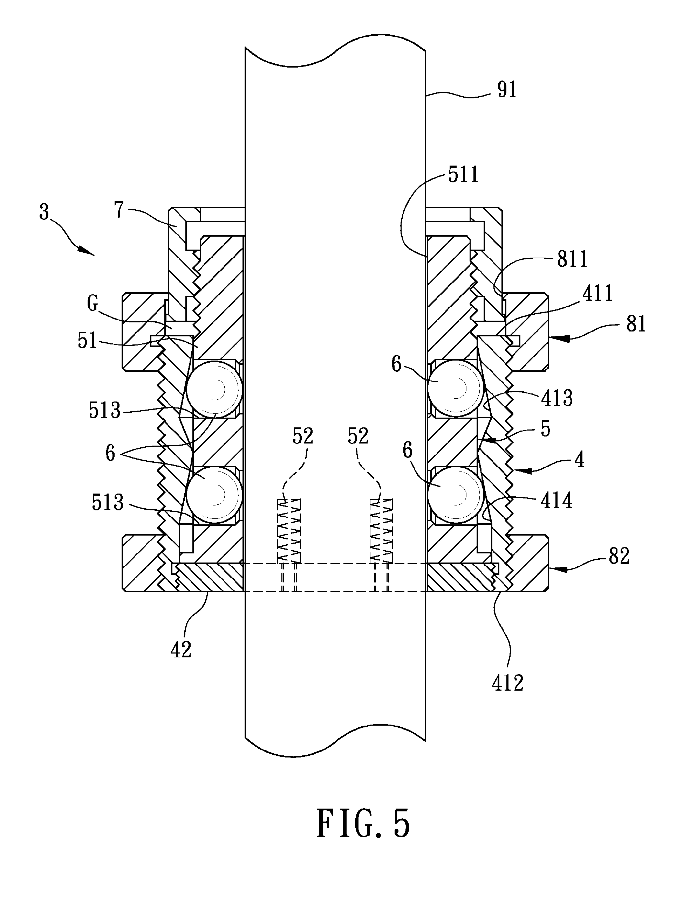

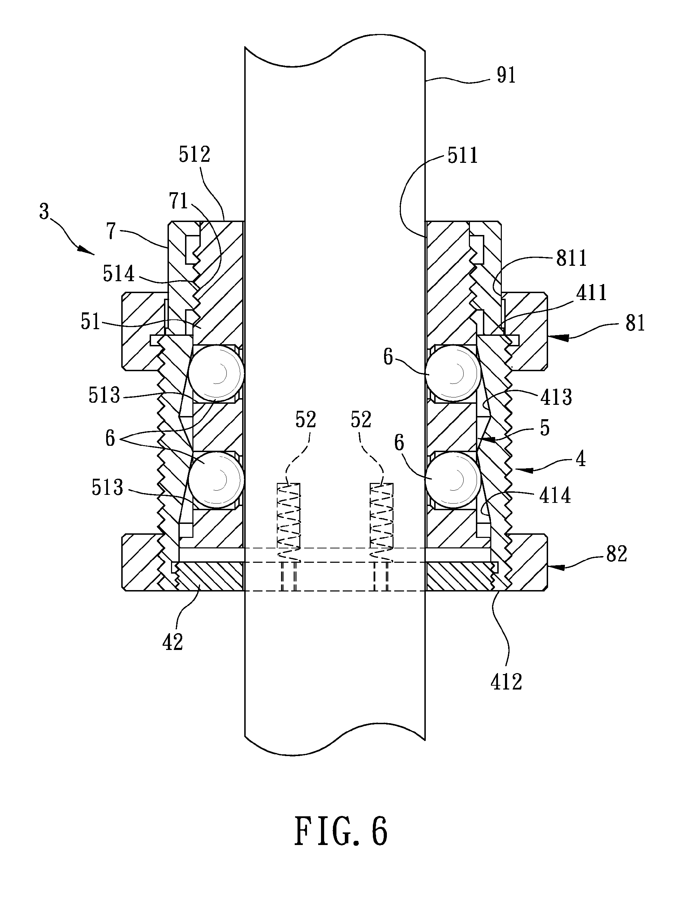

The limiting member 7 is connected to the protruding portion 512 of the inner ring member 5 and is operable to move relative to the inner ring member 5 between a locked position and an unlocked position. With reference to Figs. 4 and 5, when in the unlocked position, the limiting member 7 forms a gap (G) with the outer ring member 4, and is operable to bring the inner ring member 5 to move relative to the outer ring member 4 to overcome the biasing force of the resilient components 52 such that the positioning members 6 are not forced by the corresponding first and second converging portions 413, 414 of the outer ring member 4 to abut against the vertical extension member 91 to thereby permit the mobile safety anchoring device 3 to slide along the vertical extension member 91. Referring to Fig. 6, when in the locked position, the limiting member 7 abuts against the outer ring member 4 and prevents movement of the inner ring member 5 relative to the outer ring member 4 against the biasing force generated by the resilient components 52.

Referring back to Figs. 3 and 4, the mobile safety anchoring device 3 of this embodiment further includes a fixing ring 81 that is sleeved around the top end 411 of the outer surrounding wall 41 of the outer ring member 4 and the limiting member 7, and that includes an inner flange 811. The inner flange 811 abuts against the limiting member 7 when the limiting member 7 is in the unlocked position. The mobile safety anchoring device 3 further includes a packing ring 82 that is sleeved around the bottom end 412 of the outer surrounding wall 41 of the outer ring member 4 and that is spaced apart from the fixing ring 81.

It should be noted that, in this embodiment, each of the outer surrounding wall 41 of the outer ring member 4 and the protruding portion 512 of the inner ring member 5 has an outer thread 416, 514. Each of the fixing ring 81 and the packing ring 82 has an inner thread 812, 821, that engages threadedly the outer thread 416 for securing the corresponding one of the fixing ring 81 and the packing ring 82 to the outer surrounding wall 41. The limiting member 7 has an inner thread 71 that engages threadedly and movably the outer thread 514 of the inner ring member 5 so that the limiting member 7 is movable between the locked position and the unlocked position. However, the manner of engagement of these components is not to be limited to the above.

With reference to Fig. 4, when the limiting member 7 is in the unlocked position and when no external force is applied to overcome the biasing force generated by the resilient components 52, the resilient components 52 push the inner surrounding wall 51 of the inner ring member 5 in an upward direction from the bottom end 412 of the outer surrounding wall 41 toward the top end 411 of the outer surrounding wall 41 so that the positioning members 6 are pressed inwardly by the corresponding first and second converging portions 413, 414 to abut against the vertical extension member 91to position the mobile safety anchoring device 3 on the vertical extension member 91.

With reference to Fig. 5, to re-position the safety mobile anchoring device 3 on the vertical extension member 91, i.e., to permit sliding of the safety mobile anchoring device 3 on the vertical extension member 91, the limiting member 7 is pressed relative to the outer ring member 4 to bring the inner ring member 5 to move toward the bottom end 412 of the outer surrounding wall 41 against the biasing force of the resilient components 52, until the positioning members 6 are no longer pressured by the corresponding first and second converging portions 413, 414 against the vertical extension member 91.

After the position of the mobile safety anchoring device 3 on the vertical extension member 91 is confirmed, the limiting member 7 may then be released to allow for the biasing force of the resilient members 52 to take effect again, pushing the inner ring member 5 to the position shown in Fig. 4, and making the positioning members 6 cooperatively clamp on the vertical extension member 91 . Referring to Fig. 6, at this time, the limiting member 7 is to be rotated threadedly to the locked position, i.e., until the limiting member 7 abuts against the top end 411 of the outer surrounding wall 41, such that the inner ring member 5 is unable to move in a downward direction from the top end 411 toward the bottom end 412 against the biasing force of the resilient members 52, and therefore incapable of releasing the clamping force of the positioning members 6 against the vertical extension member 91 to thereby maintain securely the mobile safety anchoring device 3 on the vertical extension member 91, and prevent accidental movement of the inner ring member 5. Since the limiting member 7 abuts tightly against the top end 411 of the outer surrounding wall 41 and since the inner ring member 5 is immovable, an oblique force applied to the mobile safety anchoring device 3 when the limiting member 7 is in the locked position will not result in gaps between the positioning members 6 and the corresponding first and second converging portions 413, 414, allowing the positioning members 6 to maintain secure grip on the vertical extension member 9.

To move the limiting member 7 from the locked position to the unlocked position, the limiting member 7 is rotated threadedly and upwardly to reach the position in Fig. 4, where the inner flange 811 of the fixing ring 81 abuts against the limiting member 7 to prevent complete disengagement of the limiting member 7 from the inner ring member 5.

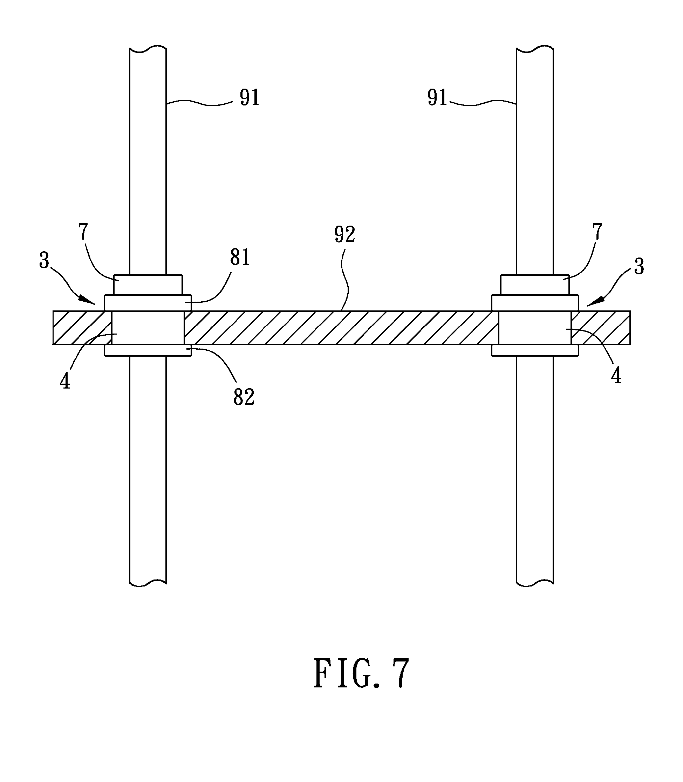

Referring to Figs. 4 and 7, multiple mobile safety anchoring devices 3 may be used together with a plurality of vertical extension members 91respectively extending therethrough. Once the mobile safety anchoring devices 3 are locked at desired locations on the respective vertical extension members 91 using the limiting members

7 thereof, a plate 92 can be placed among the mobile safety anchoring devices 3 and clampedbetween the fixing ring 81 and the packing ring 82 of each mobile safety anchoring device 3. As a result, the plate 92 can be used for displaying decorations, or for storage purposes. In this embodiment, since there are two converging portions 413, 414 for the outer ring member 4, the use of additional positioning members 6 is permitted to increase the clamping force on the vertical extension member 91. In addition, with the fixing ring 81 and packing ring 82 surrounding the outer ring member 4 and reinforcing structural strength of the outer ring member 4, the clamping force on the vertical extension member 9 by the positioning members 6 is further enhanced with reduced gaps between the inner ring member 5 and the vertical extension member 91, permitting plates 92 of various lengths and weights or having uneven loads placed thereon to be securely fixed between the fixing ring 81 and packing ring 82.

In summary, when the limiting member 7 is in the unlocked position, the mobile safety anchoring device 3 is permitted to slide along the vertical extension member 91 so as to be placed at any desirable position. Subsequently, by moving the limiting member 7 to the locked position, the mobile safety anchoring device 3 will securely clamp on the vertical extension member 91 such that inadvertent actions will not result in loosening of the mobile safety anchoring device 3 from the vertical extension member 91, thereby elevating safety of use.

## Claims

1. A mobile safety anchoring device (3) adapted to be slidably sleeved around a vertical extension member (91), said mobile safety anchoring device (3) comprising:
an outer ring member (4) adapted for surrounding the vertical extension member (91) and including an outer surrounding wall (41) that defines an accommodating space (415), said outer surrounding wall (41) having a top end (411) and a bottom end (412) that is opposite to said top end (411), an inner surface of said outer surrounding wall (41) having a first converging portion (413) that converges from said bottom end (412) toward said top end (411);
an inner ring member (5) adapted for surrounding the vertical extension member (91) and slidably and partially received in said accommodating space (415) of said outer ring member (4), said inner ring member (5) including an inner surrounding wall (51) that def ines a passage (511) for extension of the vertical extension member (91) therethrough, said inner surrounding wall (51) having a protruding portion (512) that protrudes outwardly of said accommodating space (415), and a plurality of positioning holes (513) that are disposed within said accommodating space (415);
a plurality of positioning members (6) respectively disposed in said positioning holes (513) in said inner ringmember (5) and between said first converging portion (413) and the vertical extension member (91); and
a resilient component (52) abutting against said inner surrounding wall (51) of said inner ring member (5) for generating a biasing force that moves said inner ring member (5) in relation to said outer ring member (4) in a way that said positioning members (6) are moved toward said first converging portion (413) and forced by said first converging portion (413) to abut against theverticalextension member (91), thereby positioning said mobile safety anchoring device (3) on the vertical extension member (91);
said mobile safety anchoring device (3) being **characterized by** a limiting member (7) that is connected to said protruding portion (512) of said inner ring member (5), and that is operable to move relative to said inner ring member (5) between a locked position and an unlocked position;
wherein when in the locked position, said limiting member (7) abuts against said outer ring member (4) and prevents movement of said inner ring member (5) relative to said outer ring member (4) against the biasing force generated by said resilient component (52), and when in the unlockedposition, said limiting member (7) forms a gap (G) with said outer ring member (4) and is operable to bring said inner ring member (5) to move relative to said outer ring member (4) to overcome the biasing force of said resilient component (52) such that said positioning members (6) are no longer forced by said first converging portion (413) of said outer ring member (4) to abut against the vertical extension member (91) to permit said mobile safety anchoring device (3) to slide along the vertical extension member (91).

2. The mobile safety anchoring device (3) as claimed in Claim 1, further **characterized by** a fixing ring (81) that is sleeved around said top end (411) of said outer surrounding wall (41) of said outer ring member (4) and said limiting member (7); and
**characterized in that** said fixing ring (81) includes an inner flange (811) that abuts against said limiting member (7) when said limiting member (7) is in the unlocked position.

3. The mobile safety anchoring device (3) as claimed in Claim 2, **characterized in that** the inner surface of said outer surrounding wall (41) further has a second converging portion (414) converging from said bottom end (412) toward said top end (411) and spaced apart from said first converging portion (413), said positioning holes (513) in said inner ring member (5) being respectively aligned with said first and second converging portions (413, 414) when the biasing force generated by said resilient component (52) is not overcome.

4. The mobile safety anchoring device (3) as claimed in Claim 3, **characterized in that** said outer ring member (4) further includes a blocking wall (42) secured to said bottom end (412) of said outer surrounding wall (41), said resilient component (52) abutting against and between said inner surrounding wall (51) of said inner ring member (5) and said blocking wall (42) of said outer ring member (4).

5. The mobile safety anchoring device (3) as claimed in any one of Claims 2, 3 and 4, further **characterized by** a packing ring (82) that is sleeved around and operable to move along said bottom end (412) of said outer surrounding wall (41) of said outer ring member (4) and that is spaced apart from said fixing ring (81).

6. The mobile safety anchoring device (3) as claimed in Claim 5, **characterized in that** said outer surrounding wall (41) of said outer ring member (4) has an outer thread (416), and each of said fixing ring (81) and said packing ring (82) has an inner thread (812, 821) that engages threadedly said outer thread (416) for securing the corresponding one of said fixing ring (81) and said packing ring (82) to said outer surrounding wall (41).

7. The mobile safety anchoring device (3) as claimed in Claim 5, **characterized in that** saidprotrudingportion (512) of said inner surrounding wall (51) of said inner ring member (5) has an outer thread (514), and said limiting member (7) has an inner thread (71) that engages threadedly and movably said outer thread (514) so that said limiting member (7) is movable between the locked position and the unlocked position.

8. The mobile safety anchoring device (3) as claimed in Claim 5, **characterized in that** said resilient component (52) is a compression spring.
